(19)

**Europäisches Patentamt**
**European Patent Office**
**Office européen des brevets**

(11)  **EP 2 354 762 B1**

(12)  # EUROPEAN PATENT SPECIFICATION

| | |
|---|---|
| (45) Date of publication and mention<br>of the grant of the patent:<br>**27.11.2013 Bulletin 2013/48** | (51) Int Cl.:<br>**G01C 21/26** (2006.01) |
| (21) Application number: **10015809.6** | |
| (22) Date of filing: **20.12.2010** | |

(54) **Navigation system and method for determining parameters in a navigation system**

Navigationssystem und Verfahren zur Bestimmung der Parameter in einem Navigationssystem

Système de navigation et procédé pour déterminer les paramètres dans un système de navigation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2010 EP 10001189**

(43) Date of publication of application:
**10.08.2011 Bulletin 2011/32**

(73) Proprietor: **Harman Becker Automotive Systems GmbH**
**76307 Karlsbad (DE)**

(72) Inventors:
• **Pryakhin, Alexey**
  **81476 München (DE)**

• **Kluge, Sebastian**
  **81539 München (DE)**
• **Kunath, Peter**
  **80999 München (DE)**

(74) Representative: **Müller, Wolf-Christian**
**Koch Müller**
**Patentanwaltsgesellschaft mbH**
**Maaßstrasse 32/1**
**69123 Heidelberg (DE)**

(56) References cited:
**US-A1- 2008 004 789**

**Description**

The present invention relates to a system for a motor vehicle and a method for determining accelerations.

From WO 2008/112335 A1 an apparatus and method is known for determining a suggested route having an estimated minimum fuel usage for a vehicle based on a estimated fuel efficiency for the vehicle for different speeds of the vehicle and based on estimated speeds for the route. The estimated fuel efficiency for the vehicle is based on aggregated data for the vehicle. Alternatively, the estimated fuel efficiency is based on actual data for the vehicle. In some embodiments, suggested routes are constrained by user route preferences, and real-time route information. Real-time route information data includes current traffic conditions, current accident reports, weather information, current construction sites, etc. Alternatively or additionally, the estimated fuel usage is based on actual driver behavior data. Actual driver behavior data includes data collected from the driving behavior of a user such as whether a user regularly speeds, whether the user accelerates fast and thus uses more fuel in a stop then a typical driver, etc. For example, the route determiner uses the speed limit of a segment plus 10 miles per hour for the estimated speed in calculating the estimated amount of fuel that will be used for a user the typically speeds 10 miles per hour over the speed limit. In some embodiments, the route determiner is arranged to take into account a list of driving styles, for example "like to speed", "don't usually speed", etc., and receive from the input device a selected driving style from the user.

US 2008/0004789 A1 shows inferring road speeds for context-sensitive routing. Road velocities shall be reasoned about from properties of roads and perhaps limited sensed data. Road speeds might be functions of properties of roads or classes of roads (e.g., two lane, four lane, expressway, state highway, county highway, ...), the type of area surrounding roads (e.g., commercial, residential, agricultural, ...), the terrain that roads pass through, posted speed limits, nearby resources such as shopping areas, recreational parks, etc, and other suitable data relating to road segments/ intersections. In addition, other sources of information might be used, including weather information, relationships among roads, road types, and road situations, (e.g., traffic jams on nearby sensed arterials), and special geometric relationships between types of roads (e.g., the distance between a road segment from a freeway on-ramp or off-ramp). Given some limited sensed data, statistical methods (including those methods known as machine learning and reasoning techniques) can be employed to generate insights about how to best harness such data, as well as higher-order relationships and patterns among such data, to predict the velocities of road segments in different contexts, including currently active contexts, near future contexts, and more distant future contexts. The methods can be used to construct automated prediction systems that continue to compute probability distributions over the velocities over all road segments.

In US 2008/0004789 A1 a speed analysis component can learn a separate speed for each time-of-day and weekday/weekend breakdown by examining each pair of consecutive GPS points in snapped traces. The speed of a driver between each pair can be calculated, and the speed can be utilized to create a running average for every road segment traversed to get from A to B. Speed measurements are applied to the running average associated with a block of time whose time characteristics match those of timestamps of collected data involved in the speed calculation. Thus, the speed analysis component can determine speeds associated with road segments in various categories (time of day, day of week).

The object of the invention is to improve as much as possible a method for determining accelerations.

This object is achieved by a method having the features of the independent claim 1. Advantageous refinements are the subject of dependent claims and included in the description.

Accordingly, a method is provided for determining positive and/or negative accelerations. The method may be advantageously implemented In a system such as a navigation system of a motor vehicle. The navigation system is installed, for example, in a motor vehicle. The system has, for example, an arithmetic unit for carrying out method steps.

According to the method, a road segment is determined from map data based on a current position. The road segment is advantageously defined between two points of a road in the map data. The map data is stored, for example, on a storage medium such as a semiconductor memory or a magnetically or an optical data carrier. The current position is ascertained, for example, based on sensor information or radio cells or preferably GPS satellite data.

According to the method, a plurality of acceleration values and/or a plurality of velocity values are measured within the determined road segment. Advantageously, the acceleration values and/or the velocity values may be measured at fixed time intervals by an electronic system. In a motor vehicle, the acceleration values and/or the velocity values are measured with the aid of sensors and are transmitted via a CAN bus. According to the method, stored parameters of a probability distribution of acceleration within the road segment are read out from a memory. The stored parameters are associated with the determined road segment. The parameters map a dynamic of positive and/or negative accelerations within a road segment. The frequency and intensity of accelerations within the determined segment are covered by the parameters. The parameters make it possible to display a curve or a progression of accelerations within the determined segment.

At least one parameter is preferably a measure of statistical dispersion of acceleration. Common examples of measures of statistical dispersion of acceleration are the variance, standard deviation and interquartile range. The measure of statistical dispersion makes it possible to map the dynamics of the acceleration within the road segment.

Studies conducted by the applicant have shown that fuel consumption may be more precisely determined by means of calculations based on the measure of statistical dispersion as a parameter of the probability distribution of acceleration.

The parameters of the probability distribution enable to space-efficiently store on a navigational system or in a navigational database a description of the movement of a vehicle, comprising in particular probability distribution of acceleration. The parameters describe not only the average dynamics but also the micro dynamics of a vehicle in traffic flow, depending on the traffic situation.

Depending on the type of probability distribution, different parameters may be used. The probability distribution is preferably a normal distribution or a Laplace distribution. The parameters are associated with the probability distribution used. The parameters are, for example, an expectation value and a standard deviation, if a normal distribution is used. In the event of a multi-dimensional distribution, the parameters may be a vector or matrix, for example in case of a multivariate normal distribution.

For example the stored parameters are taken from at least one preceding measurement or preset initial values. According to the method, new parameters of the probability distribution of acceleration within the road segment are not only calculated from the read-out parameters but also from the plurality of acceleration values and/or the plurality of velocity values.

After the new parameters have been calculated, the new parameters of the probability distribution of acceleration are stored. The stored new parameters of the probability distribution of acceleration are preferably evaluated for additional functions which are dependent on the road segment.

Preferably the new parameters are calculated for the specific road segment for which the acceleration values and velocity values were measured. Alternatively or in addition, the new parameters are calculated for a class of road segments for which the road segment is associated with, so that the new parameters are dedicated to the specific road segment or to the class of road segments. It is possible, that the new parameters dedicated to the specific road segment differ from the new parameters dedicated to the class of road segments.

A further object of the invention is to provide a system which is improved as much as possible and is suitable for a motor vehicle.

This object is achieved by the system having the features of the independent Claim 9. Advantageous refinements are the subject of dependent claims and included in the description.

Accordingly, a system is provided for a motor vehicle. The navigation system has an arithmetic unit for carrying out a program run. The arithmetic unit is, for example, a processor, for example a central processing unit (CPU). The system preferably has a navigation system as a component, which is configured to receive satellite signals.

The system has a memory which contains the map data, including road segments. Additionally parameters and/or measured values are preferably stored in the memory. The memory is preferably a non-volatile memory.

The system preferably has an interface to a data bus for receiving measured values of a velocity and/or an acceleration. The data bus is preferably a field bus of a motor vehicle, for example a Controller Area Network (CAN) bus.

The system has a receiver for determining a current position. The receiver is preferably a Global Positioning System (GPS) receiver or a receiver for receiving other position data from sensors or the like. The receiver, interface and memory are preferably connected to the arithmetic unit.

The arithmetic unit is configured to determine a current road segment based on the current position. For this purpose, the stored map data is accessed by the arithmetic unit in order to determine the current road segment belonging to the determined current position.

The arithmetic unit is configured to load parameters of a probability distribution of acceleration from the memory. The parameters are associated with at least one road segment of the map data. The parameters of the probability distribution of acceleration are determined from velocity measurements and/or acceleration measurements.

The refinements described below relate to the system as well as to the method for determining accelerations. Method features may correspond to functions of the system. Functions of the system imply corresponding method steps.

According to a preferred refinement, the map data has classes of road segments. Road segments having preset road-specific criteria are associated with each class. A class associated with a determined road segment is preferably ascertained by the arithmetic unit. The new parameters of the probability distribution of acceleration are preferably stored for the road segment and/or for the class associated with the road segment. Preferably each road segment is assigned to a class in order to classify all road segments. The splitting of the classes may be according to different road-related criteria, for example on a country-specific basis. One means of classification is, for example, the permissible maximum velocity set by law or alternatively or in combination a (sub)division according to different urban, short-distance and long-distance roads or freeways.

Preferably the arithmetic unit Is configured to load parameters of the probability distribution of acceleration from the memory in order to calculate route information. The parameters of the probability distribution of acceleration are preferably calculated with the use of the method explained above. The probability distribution of acceleration is preferably a normal distribution or a Laplace distribution.

According to an advantageous refinement, route information can be calculated for any route. For the calculation of the route information the parameters of the probability distribution of acceleration are entered into an algorithm. The route information may be displayed directly to the user with the aid of a display device of the system. It is also possible to use the route information to calculate further data, for example to calculate a route under specific limit conditions e.g. taking the route information into account.

According to an advantageous refinement, the new parameters of the probability distribution of acceleration are calculated using a recursion formula. The measured acceleration values and/or velocity values of the road segment and stored parameters of the probability distribution of acceleration are input into the recursion formula. Additionally it is possible to pre-calculate coefficients (average, amplitudes) corresponding to several preset frequencies, being a part of the recursion formula.

According to an alternative refinement, a current probability distribution of acceleration having current parameters of the probability distribution is calculated from the plurality of acceleration values and/or the plurality of velocity values being measured. The new parameters of the probability distribution of acceleration are calculated from the current parameters of the current probability distribution of acceleration and the stored parameters. This intermediate step could be used to first calculate the current probability distribution of acceleration and check validity of the current distribution before calculating the new parameters of the probability distribution of acceleration. Additionally or alternatively coefficients for a set of frequencies could be calculated and input to calculate the current probability distribution of acceleration and/or input into the recursion formula, wherein the coefficients are derived from the plurality of acceleration values and/or the plurality of velocity values.

According to an advantageous refinement, the parameters stored in the memory and assigned to the road segment are read out in order to calculate the new parameters. For this purpose, the road segment preferably has an Identifier, the identifier being stored together with the stored parameters and assigned to the stored parameters.

In an alternative refinement, the stored parameters are assigned to a class with regard to the road segment. The stored parameters of the class are preferably read out for calculating the new parameters. Using the identifier also one class of road segments can be chosen accordingly.

According to a preferred refinement, the current position of the (navigation) system is preferably determined using a GPS receiver. The current road segment is preferably determined from the current position and map data. The map data is preferably stored in a memory of the (navigation) system.

In another advantageous refinement, it is provided that an item of reliability information is calculated in addition to the new parameters of the probability distribution of acceleration. The reliability information is assigned to a validity of the calculated parameters of the probability distribution of acceleration for a subsequent evaluation. Different variables, for example the number of measurements within a road segment, may be used as the reliability information. The new parameters of the probability distribution of acceleration are preferably stored together with the reliability information associated with the new parameters.

According to an advantageous refinement variant, a time period of the measurement, for example the time of the day and the day of the week, is determined. For example, the measurement is assigned to a working day or to a non-working day in order to take into account typically deviating traffic volumes on working days. An assignment to a calendar month is also possible in order to take into account statistical weather Influences.

The stored parameters of the probability distribution of acceleration assigned to the time period (and to the road segment/class of road segments) are preferably read out from the memory in order to calculate the new parameters. The calculated new parameters of the probability distribution of acceleration assigned to the time period (and to the road segment/class of road segments) are preferably stored.

According to another particularly advantageous refinement variant, the parameters of the probability distribution of acceleration are assigned to different traffic volumes using a traffic-related parameter of the probability distribution of acceleration. The traffic-related parameter preferably has a range of values, for example from 0 to 1. Alternatively the traffic-related parameter has a fixed number of values, for example the values 1 and 0. Both make it possible to assign a variable to different traffic volumes. For example, moving traffic is assigned the value 0 of the traffic-related parameter and a higher traffic volume - for example commuter traffic - is assigned the value 1 of the traffic-related parameter.

In an advantageous refinement of the system, the arithmetic unit is preferably configured to evaluate measured values of the velocity and/or acceleration within a road segment. The arithmetic unit is preferably configured to calculate new parameters of the probability distribution of acceleration based on the parameters stored in the memory and the measured values of the velocity and/or the acceleration within the road segment. The arithmetic unit is advantageously configured to store - in the memory - the calculated new parameters that are assigned to the road segment and/or are assigned to the class of road segment.

According to an advantageous refinement variant, the arithmetic unit is configured to calculate route information based on the parameters of the probability distribution of acceleration. The route is determined from the road segments of the map data.

In another advantageous refinement variant, the arithmetic unit is configured to read out the parameters of the probability distribution of acceleration which are associated with the road segment of the current position. The arithmetic unit is further configured to determine control data for controlling a drive of the motor vehicle based on the read-out parameters of the probability distribution of acceleration.

The parameters of the probability distribution of acceleration are preferably assigned to one specific road segment. This makes it possible to store a probability distribution of acceleration for each individual road segment with little effort. In particular, road segments which are frequently used by the driver may be detected with statistical accuracy in this manner.

In another particularly advantageous refinement variant, the parameters of the probability distribution of acceleration are assigned to a class of road segments. The map data has classes of road segments. The road segments which meet the predefined road-specific criteria are associated with the corresponding class.

The association of parameters with road segment and class may also be combined with each other by assigning parameters to the individual road segment as well as by assigning (other) parameters to the associated classes of road segments. If parameters of the individual road segment are present, these parameters have higher priority than the parameters of the corresponding class.

The refinement variants described above are particularly advantageous individually as well as in combination. All refinement variants may be combined with each other. Some possible combinations are explained in the description of the exemplary embodiments in the figures. However, these possibilities illustrated therein for combining the refinement variants are not a limitation.

The invention is explained in greater detail below on the basis of exemplary embodiments illustrated in the drawings, where

Figure 1a    shows a schematic illustration of a system for a motor vehicle;

Figure 1b    shows a schematic block diagram of a system;

Figure 2    shows a schematic diagram that illustrates velocity and acceleration curves plotted over time;

Figure 3    shows a schematic diagram of a two-dimensional probability distribution; and

Figure 4    shows a schematic flow chart.

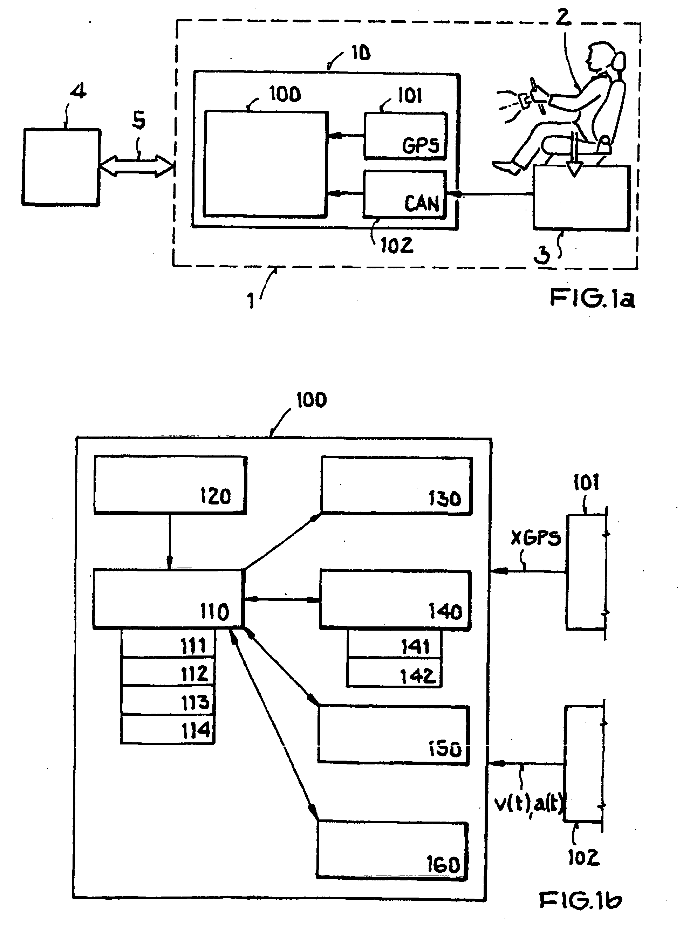

Figure 1 shows a motor vehicle 1, in which a driver 2 determines the movement of the motor vehicle via a drive and control system 3 of the motor vehicle 1. Motor vehicle 1 is located in a road traffic environment 4 with which a driver 2 interacts via traffic rules 5 and physical limit conditions 5. A system 10 usable for navigation, which has a device 100, a GPS receiver 101 and an interface 102 to a bus (CAN) and thus to the electronic system of motor vehicle 1, is provided in the motor vehicle 1. Device 100 may read In data of motor vehicle 1 via interface 102. Device 100 may read in position data via GPS receiver 101.

The components of device 100 are explained in greater detail on the basis of Figure 1b. Device 100 has an arithmetic unit 110, an input device 120, a display 130, a memory unit 140 and an optional route calculator 150 and an optional communications unit 160 for wireless communication.

Parameters in a parameter memory area 142 and/or measured data and/or map data 141 may be stored in memory 140. Device 100 is  connected to data bus CAN via interface 102 for receiving measured values v(t), a(t) of a velocity and/or an acceleration. The device is also connected to receiver 101 for determining a current position XGPS, using satellite or other signals.

Arithmetic unit 110 has multiple functions 111, 112, 113, 114. A function 111 is to determine the current position using position data XGPS. Arithmetic unit 110 is further configured for function 112 in order to determine a current road segment on the basis of current position XGPS and map data 141. Measured values v(t), a(t) of the velocity and/or acceleration are combined using function 113 for the purpose of data aggregation.

The complex movement of a vehicle in traffic flow determines not only the overall travel time but also the amount of fuel, which is needed to pass through a road segment. The system 10 comprises a compact mathematical description of the movements of the vehicle, which is suitable for space efficient storage in the memory 140 of the system or in a wired/wireless connected external database. The system is configured to space-efficiently store a description of the movement of a vehicle, comprising in particular the acceleration curves or distributions, which describe not only the average dynamics but also the micro-dynamics of a vehicle in traffic flow, depending on the traffic situation. Additionally average speed parameters could be combined advantageously.

The static parameters used by conventional navigation systems are not sufficient to determine the fuel consumption of a car on a road segment. Especially in combination with dynamically changing traffic situations the system 10 of Fig. 1b is developed. The system 10 comprises a model, which describes the movement of a single vehicle in a certain traffic situation on a given road segment. The model is mapped by function 114, in which the arithmetic unit 110

is configured to load parameters of a probability distribution of acceleration of the motor vehicle 1 from memory 140, e.g. in order to calculate route information. For example, a normal distribution or a Laplace distribution may be used as the probability distribution. In the case of a normal distribution of acceleration the parameters used are the variance and the mean acceleration. Additionally a distribution of velocity or an average velocity within the road segment may be used.

Each road segment is assigned to a class of road segments. All road segments are divided by a preset number of classes. The classification of road segments may be embodied differently in each country. For example, the road segments are assigned to significance within a route. For example, a long-distance road segment, such as a freeway, highway, national highway or regional road has maximum significance. A short-distance road segment between two cities or towns, on the other hand, has second highest significance. Another means of classification is to divide the road segments according to the legally permissible maximum velocity - unlimited, 130 km/h, 120 km/h, 100 km/h, 50 km/h, etc. A still further means of classification is to divide the road segments according to the road's geometric features, such as number of curves, uphill gradient, downhill gradient, etc. The types of road segment classifications according to different classes may also be combined with each other.

Parameters of the probability distribution of acceleration are determined from the velocity measurements and/or acceleration measurements and stored In memory 140 as default values for each class of road segments. The parameters may be measured and calculated ahead of time for each road segment class, using test trips of one or more vehicles. According thereto, the parameters of the probability distribution are assigned to the class including the road segment (s). It is also possible to assign segment-specific parameters to a specific road segment additionally. In the exemplary embodiment according to Figure 1b, for example, 8 x 8 x 8 classes are used.

A fuel consumption for a specified route may be calculated as route Information on the basis of the parameters of the probability distribution of acceleration. Additionally an algorithm takes into account a vehicle model and the driver's gear shifting behavior e.g.. The fuel consumption may be displayed, for example, with the aid of display 130. The fuel consumption determined on the basis of the parameters of the probability distribution of acceleration may, in turn, also be used to calculate the route, for example to ascertain the route having the lowest total fuel consumption or the most favorable route having a filling station within a calculated range.

Another item of route information is, for example, the strain on the driver due to the number of acceleration and braking operations, which are calculated on the basis of the parameters of the probability distribution of acceleration, and which are displayed e.g. in graphic form on display 130, for example with the aid of a strain index. Additionally the average velocity for a route may be determined and displayed on the basis of the parameters.

In comparison to static map data such as distance, number of curves or maximum or average velocity, a more accurate description of the actual accelerations within a road segment or class of road segments is obtained with the aid of the plurality of measured values within the road segment and of the calculation of the parameters of the probability distribution of acceleration.

The parameters of the probability distribution of acceleration can be used in a drive-train control of the vehicle travelling on the respective road segment, in order to optimize the drive-train efficiency and travelling comfort. For example in case of a greater variance of acceleration within a specific segment, the control of the drive-train can be adapted to a more dynamic driving power, changing for example the pressure and/or air fuel ratio.

In the exemplary embodiment according to Figure 1b, the parameters for each class of road segments are stored as default values in memory 140. Moreover, device 100 of the system 10 in the exemplary embodiment according to Figure 1b Is configured to continuously adapt the parameters for a specific road segment and/or for a class of road segments on the basis of measured values v(t), a(t) of motor vehicle 1. The device 100 is thus embodied as a self-learning device 100 with regard to the parameters of the probability distribution of acceleration.

In order to further enhance the usability and descriptive power of the parameters of the probability distributions of acceleration, the parameters are adaptively estimated using driving data which is collected on-the-fly In the system 10 which is installed in the vehicle. In this manner, the parameter variance associated with an aggressive driver will have a greater value than in case of a calm driver. Thereby the greater variance will lead to a greater fuel consumption as well, which can be calculated using the adaptive estimation of the parameters.

Arithmetic unit 110 is configured to determine current parameters of a current probability distribution of accelerations on the basis of measured values v(t), a(t) of the velocity and/or the acceleration in a road segment. These further parameters may differ from the existing parameters already stored. Arithmetic unit 110 is configured to calculate new parameters on the basis of both, the parameters stored in memory 140 and the current parameters determined through measurement. Alternatively the arithmetic unit 110 is configured to calculate new parameters on the basis of the parameters stored in memory 140 and the measurement values, for example by using a recursive function. Arithmetic unit 110 subsequently stores the new parameters assigned to the road segment in memory 140. The new parameters may be used accordingly as input values of an algorithm for calculating the route information.

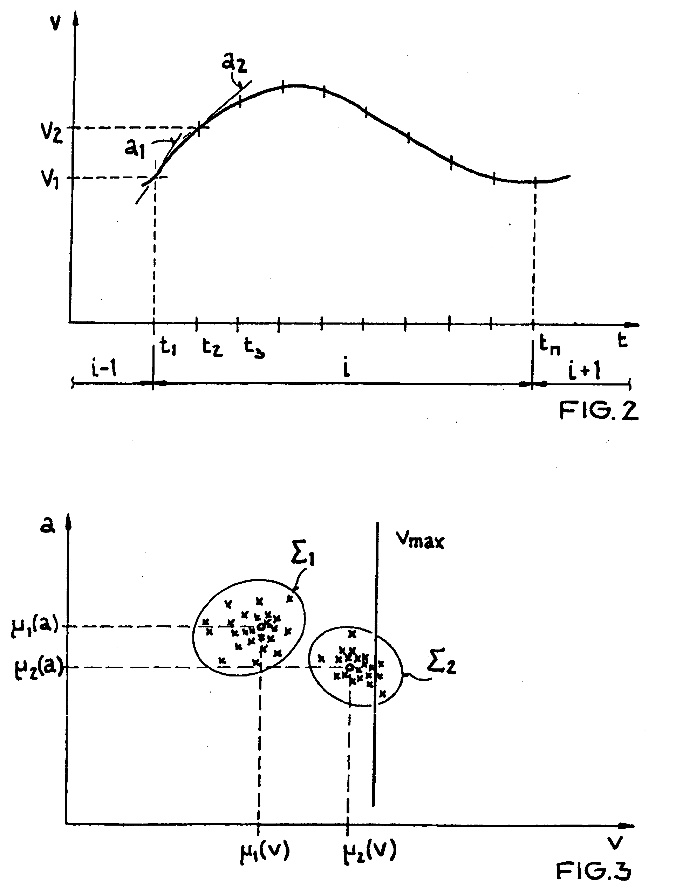

Figure 2 shows a schematic diagram having a curve of measured values v1, v2, a1, a2 over time t. Measured values v1, v2, a1, a2 are ascertained in road segment i. Measured values for preceding road segment i-1 and for subsequent road segment i+1 are not illustrated. For example, measured values v1, v2, a1, a2, etc. are ascertained at discrete measuring time points t1, t2, ... tn in equal time Intervals of, for example, 1/10 of a second. The measuring time points are included in a time period, the time period resolution being, for example, one hour and an indication of whether the day is a working day. A time period resolution of morning/afternoon or day/night is also possible.

For example, a velocity measured value v1 or v2 and an acceleration measured value a1 or a2 are schematically illustrated in the diagram according to Figure 2 for each of measuring time points t1 and t2. However, a much larger number of measured values is usually ascertained for a road segment i. Measured values v1, v2, a1, a2 are ascertained, for example, by a vehicle electronic system and transmitted over a data bus to device 100 and at least temporarily stored in device 100. For example they are transmitted via a CAN-Bus using the interface 102 of navigation system 10.

Figure 3 shows an exemplary embodiment of an evaluation of measured values with the aid of a two dimensional probability distribution of acceleration and velocity using a schematic diagram. Measured values (v1, a1) ..., (vn, an) are interpreted as implementations of a random variable $\underline{x}$ = (v, a) (random vector). In Figure 3, the Individual values $\underline{x}$ are illustrated by a cross to which a value of an acceleration a and a value of a velocity v are assigned. The legally permissible maximum velocity vmax in examined road segment i is also illustrated.

Figure 3 shows two probability distributions, which are dependent on the traffic volume. The two probability distributions may be described as

$$(v,a) \sim \lambda \cdot N(\mu_1, \Sigma_1) + (1-\lambda) \cdot N(\mu_2, \Sigma_2) \qquad (1)$$

Where

$$\lambda \in \{0,1\} \qquad (2a)$$

is used for a concrete numbers, or

$$\lambda \in [0,1] \qquad (2b)$$

is used for a range from zero to one.

$\lambda$ is an overlay parameter that describes the probability of a (moderate) traffic volume. Parameter $\lambda$ within road segment i is preferably assumed to be constant.

$N(\mu, \Sigma)$ is a two-dimensional normal distribution. $\mu, \Sigma$ are parameters called expectation value vector $\mu(\underline{x})$ and covariance matrix $\Sigma$ of the two-dimensional normal distribution. In Figure 3, the values belonging to covariance matrix $\Sigma_1$ are assigned to a moderate traffic volume, and the values belonging to covariance matrix $\Sigma_2$ are assigned to freely moving traffic. The diagram in Fig. 3 shows, that although the average velocity $\mu_2(V)$ is higher for the second probability distribution of freely moving traffic the average acceleration value and the dynamic of accelerations is lower. Therefore in case of moderate traffic, the fuel consumption is significantly higher, which does not result from the average velocity but does result from the probability distribution of acceleration.

If a fleet of vehicles is available, the probability distribution may be determined with the aid of a plurality of test trips in road segment i. The parameters of the calculated probability distribution for road segment i may be transmitted, for example, to a central computer via communications unit 160 according to Figure 1b. The central computer may, in turn, send the parameters of the probability distribution for the road segments to all navigation systems of all vehicles in the fleet together in the form of an update.

According to another exemplary embodiment, a probability distribution of acceleration, for a fixed set of frequencies $f_k$ is calculated, e.g.

$$f_k = \frac{k\pi}{10s}, k = 1,...,5 \qquad (3)$$

The velocity curves are defined locally in road segment i on the basis of

$$v^i(t) = v_0^i + \sum_{k=1}^{5} A_k^i \sin(f_k t) \qquad (4a)$$

where s is the second, $v_0$ is the average velocity and $A_k$ is the amplitude for each acceleration. In this exemplary embodiment, driving maneuvers with a duration of 2 seconds to 5 seconds are taken into account. The formula 4a is suitable for a time interval from zero to five seconds, whereas in another embodiment formula 4b is suitable for a time interval from zero to ten seconds:

$$v^i(t) = v_0^i + A_0^i t + \sum_{k=1}^{5} A_k^i \sin(f_k t) \qquad (4b)$$

The coefficients ($v_0^1$, $A_0^1$, $A_1^1$, $A_2^1$, $A_3^1$, $A_4^1$, $A_5^1$) determined In road segment i are interpreted as the implementation of a random variable, the vector $\underline{x} = (v_0, A_0, A_1, A_2, A_3, A_4, A_5)$. The combination of amplitude and frequency is correlated to an intensity of acceleration (negative = braking/positive= accelerating). A significant decay behavior in amplitudes $A_k$ is observed for rising k. In this exemplary embodiment, driving maneuvers with a duration of 2 seconds to 10 seconds are taken into account. The probability distribution having random variable $x = (v_0, A_0, A_1, A_2, A_3, A_4, A_5)$ is similar to the probability distribution of $\underline{x} = (v, a)$, i.e. $v \approx v([0,10s])$, $a \approx dv/dt([0,10s])$ or simplified $v \approx v_0$, $A_k \approx a$.

The normal distribution or the Laplace distribution may be used, for example, as a multidimensional probability distribution.

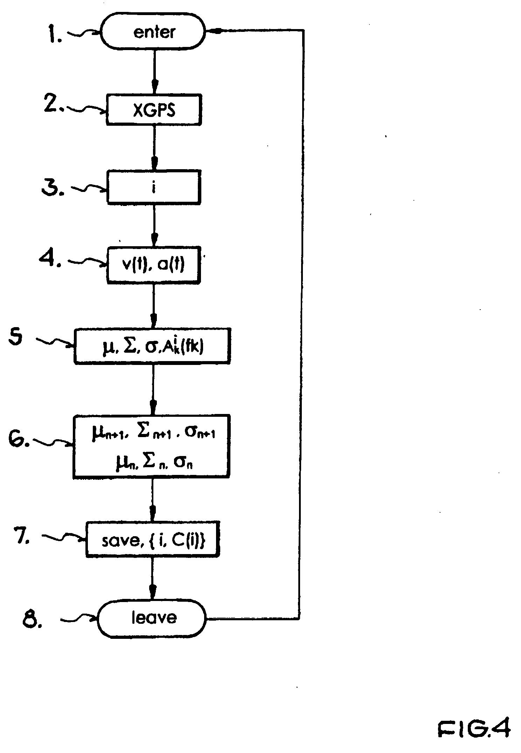

A flow chart for a possible sequence of method steps is illustrated schematically In Figure 4. In step 1, the motor vehicle travels along a current road segment i. In second step 2, a positioning Is carried out with the aid of a signal, determining the position XGPS. In third step 3, the current road segment i is determined from the ascertained position XGPS and map data.

In fourth step 4, the measured data is aggregated. Velocity and/or acceleration curves in road segment i - as illustrated in Figure 2- are plotted therein. In fifth step 5, data are aggregated and/or intermediate data are calculated. If no intermediate data are used further this step 5 can be omitted. In the fifth step 5 for example parameters of a current probability distribution of acceleration - for example normal distribution - based on the measured values is calculated. In the case of a multidimensional normal distribution, as in Figure 3, current expectation value vectors $\underline{\mu}$ and current covariance matrices $\Sigma$ are calculated. In the case of a current one-dimensional normal distribution, a current expectation value $\mu$ and current standard deviation $\sigma$ may be calculated at least for accelerations. It is also possible to calculate the coefficients $(v_0^i, A_1^i, A_2^i, A_3^i, A_4^i, A_5^i)$ corresponding to the set of frequencies described In formula (3) and (4).

In sixth step 6, a comparison with associated parameters $\mu_n$, $\Sigma_n$ or $\sigma_n$ stored in memory 140 is carried out. These stored parameters $\mu_n$, $\Sigma_n$ or $\sigma_n$ are updated by calculating new parameters $\mu_{n+1}$, $\Sigma_{n+1}$ or $\sigma_{n+1}$ using the current parameters $\mu_n$, $\Sigma_n$, $\sigma_n$ or a recursion formula, for example the recursion formula (5), (6) described below. The new parameters $\mu_{n+1}$, $\Sigma_{n+1}$ or $\sigma_{n+1}$ are stored in seventh step 7 - assigned to road segment i or a class C(i) of road segments.

The updating of the parameters of the probability distribution is explained in greater detail, based on the example of acceleration a. The following recursion formula is derived for acceleration a from the statistical formulas for expectation value and variance:

$$\mu_{n+1} = \frac{n}{n+1}\mu_n + \frac{1}{n+1}a_{n+1} \qquad (5)$$

respectively

$$\sigma_{n+1}^2 = \frac{n-1}{n}\sigma_n^2 + \mu_n^2 + \frac{1}{n}a_{n+1}^2 - \frac{n+1}{n}\mu_{n+1}^2 \qquad (6)$$

where n is the number of preceding observations, $\mu_n$ is the previously calculated mean value for a, $\sigma_n^2$ is the previously calculated variance for a and $a_{n+1}$ is the new acceleration observation. Accordingly, expectation vector $\underline{\mu}_n$ and covariance matrix $\Sigma_n$ may be used for a multidimensional calculation.

Additionally parameters for the probability distribution of velocity may be calculated. The following recursion formula is derived for velocity v from the statistical formulas for expectation value and variance:

$$\mu_{n+1} = \frac{n}{n+1}\mu_n + \frac{1}{n+1}v_{n+1} \qquad (7)$$

respectively

$$\sigma_{n+1}^2 = \frac{n-1}{n}\sigma_n^2 + \mu_n^2 + \frac{1}{n}v_{n+1}^2 - \frac{n+1}{n}\mu_{n+1}^2 \qquad (8)$$

where n is the number of preceding observations, $\mu_n$ is the previously calculated mean value for v, $\sigma_n^2$ is the previously calculated variance for v and $V_{n+1}$ is the new velocity observation. Accordingly, expectation vector $\underline{\mu}_n$ and covariance matrix $\Sigma_n$ may be used for a multidimensional calculation.

After new parameters $\mu_{n+1}$, $\Sigma_{n+1}$ or $\sigma_{n+1}$ have been stored in step 7, they are available as stored parameters for the next update. An item of reliability information is also stored, which indicates how reliable the parameters are for use in further evaluations, for example in calculating the fuel consumption. Different values may be used as reliability information. For example, the difference between the current value of expectation vector $\underline{\mu}_{n+1}$ and stored expectation vector $\underline{\mu}_n$ may be stored and/or evaluated. Another possibility is to store and/or evaluate the number n of measurements. Reliability information n may additionally be used for recursion formula (5), (6), when the next values for the acceleration a are measured for the same segment i. Reliability information n may additionally be used for recursion formula (7), (8), when the next values for the velocity v are measured for the same segment i.

In step 8, the vehicle leaves road segment i and may subsequently enter a new road segment i+1, steps 1 through 8 being carried out accordingly.

The invention is not limited to the embodiment variants illustrated in Figures 1a through 4. For example, it is possible to use a probability distribution function other than the normal distribution or the Laplace distribution. It is also possible to output other route information, either for a new calculation or for display. The functionality of the navigation device according to Figure 1b may be particularly advantageously used for a motor vehicle.

**List of Reference Numerals**

| | |
|---|---|
| 1 | vehicle |
| 2 | driver |
| 3 | drive system, control system |
| 4 | traffic, road |
| 5 | interaction |
| 10 | system, navigation system |
| 100 | device |
| 101 | GPS receiver |
| 102 | interface |
| 110 | arithmetic unit |
| 111, 112, 113, 114 | functions of the arithmetic unit |
| 120 | input device |
| 130 | display device |

| 140 | memory unit |
|---|---|
| 141 | map data |
| 142 | parameter memory area |
| 150 | route calculator |
| 160 | communications unit |
| a | acceleration |
| a(t), a1, a2 | acceleration measured values |
| Ak, A1, A2, A3, A4, A5 | amplitude |
| $f_k$ | frequency |
| i, i-1, i+1 | road segment |
| n | number of measurements |
| t | time |
| t1, t2, t3, tn | measuring time points |
| C(i) | class of road segments |
| N | normal distribution |
| v | velocity |
| v0 | average velocity |
| v(t), v1, v2 | velocity measured values |
| vmax | legal maximum velocity |
| x | random variable |
| XGPS | position (GPS) |
| $\mu$, $\mu1$, $\mu2$, $\Sigma1$, $\Sigma2$, $\sigma$ | parameters of the probability distribution |
| $\lambda$ | traffic-related parameter |

**Claims**

1. A method for determining accelerations for a motor vehicle,

   - wherein a road segment (I) is determined from map data based on a current position (XGPS);
   - wherein a plurality of acceleration values (a(t), a1, a2) and/or a plurality of velocity values (v(t), v1, v2) is/are measured within the road segment (i);
   - wherein stored parameters ($\mu_n$, $\Sigma_n$, $\sigma_n$) of a probability distribution of acceleration within the road segment (I) are read out from a memory, the stored parameters ($\mu_n$, $\Sigma_n$, $\sigma_n$) being associated with the road segment (i);
   - wherein new parameters ($\mu_{n+1}$, $\Sigma_{n+1}$, $\sigma_{n+1}$) of the probability distribution of acceleration within the road segment (I) are calculated from the read-out parameters ($\mu_n$, $\Sigma_n$ $\sigma_n$) and from at least one of the plurality of acceleration values (a(t), a1, a2) and the plurality of velocity values (v(t), v1, v2); and
   - wherein the new parameters ($\mu_{n+1}$, $\Sigma_{n+1}$, $\sigma_{n+1}$) of the probability distribution are stored.

2. The method according to Claim 1,

   - wherein the map data has classes of road segment, road segments being associated with each class, and road segments of each class having identical preset road-specific criteria;
   - wherein at least one class (C(i)) associated with the determined road segment (i) is ascertained; and
   - wherein the new parameters ($\mu_{n+1}$, $\Sigma_{n+1}$, $\sigma_{n+1}$) of the probability distribution of acceleration are stored for the road segment (i) and/or for the class (C(i)) associated with the road segment (i).

3. The method according to one of claims 1 or 2,

   - wherein the new parameters ($\mu_{n+1}$, $\Sigma_{n+1}$, $\sigma_{n+1}$) are calculated using a recursion formule; and
   - wherein the measured acceleration values (a(t), a1, a2) and/or velocity values (v(t), v1, v2) of the road segment (i) and the stored parameters ($\mu_n$, $\Sigma_n$, $\sigma_n$) are Input into the recursion formula.

4. The method according to one of claims 1 to 2,

   - wherein current parameters ($\mu$, $\mu1$, $\mu2$, $\Sigma1$, $\Sigma2$, $\sigma$) of a current probability distribution of acceleration are calculated from the measured plurality of acceleration values (a(t), a1, a2) and/or the pluralité of velocity values (v(t), v1, v2); and

- wherein the new parameters ($\mu_{n+1}$, $\Sigma_{n+1}$, $\sigma_{n+1}$) of the probability distribution of acceleration are calculated from the current parameters ($\mu$, $\mu1$, $\mu2$, $\Sigma1$, $\Sigma2$, $\sigma$) and the stored parameters ($\mu_n$, $\Sigma_n$, $\sigma_n$).

5. The method according to one of claims 1 to 4,

- wherein the stored parameters ($\mu_n$, $\Sigma_n$, $\sigma_n$) are assigned to the road segment (i) and are read out In order to calculate the new parameters ($\mu_{n+1}$, $\Sigma_{n+1}$, $\sigma_{n+1}$) for the estimated road segment (I).

6. The method according at least to claim 2,

- wherein the stored parameters ($\mu_n$, $\Sigma_n$, $\sigma_n$) are assigned to the estimated class (C(I)) of the road segment (I) and read out in order to calculate the new parameters ($\mu_{n+1}$, $\Sigma_{n+1}$, $\sigma_{n+1}$) for the estimated class (C(I)).

7. The method according to one of claims 1 to 6,

- wherein a value of reliability information (n) is calculated In addition to the calculated new parameters ($\mu_{n+1}$, $\Sigma_{n+1}$, $\sigma_{n+1}$); and
- wherein the calculated new parameters ($\mu_{n+1}$, $\Sigma_{n+1}$, $\sigma_{n+1}$) of the probability distribution of acceleration are stored together with the value of reliability information (n) associated with the calculated new parameters ($\mu_{n+1}$, $\Sigma_{n+1}$, $\sigma_{n+1}$).

8. The method according to one of claims 1 to 7,

- wherein the new parameters ($\mu_{n+1}$, $\Sigma_{n+1}$, $\sigma_{n+1}$) of the probability distribution are assigned to different traffic volumes using a traffic-related parameter ($\lambda$) of the probability distribution of accelerations, the traffic-related parameter ($\lambda$) being based on the density of the trafic within the estimated road segment (I), the traffic-related parameter ($\lambda$) being estimated from the plurality of acceleration values (a(t), a1, a2) and/or the plurality of velocity values (v(t), v1, v2) and/or received traffic data.

9. A system (10) for a motor vehicle,

- comprising an arithmetic unit (110);
- comprising a memory (140) which contains map data having road segments;
- comprising an interface (102) to a data bus (CAN) for transmitting measured values (v(t), a(t)) of a velocity and/or an acceleration;
- comprising a receiver (101) for determining a current position (XGPS);
- wherein the arithmetic unit (110) is configured to determine a road segment (i) associated with the current position (XGPS); and
- wherein the arithmetic unit (110) is configured to load parameters ($\mu_n$, $\Sigma_n$, $\sigma_n$) of a probability distribution of acceleration from the memory (140), the parameters ($\mu_n$, $\Sigma_n$, $\sigma_n$) being associated with a road segment of the map data, and the parameters ($\mu_n$, $\Sigma_n$, $\sigma_n$) of the probability distribution of acceleration being determined from velocity measurements and/or acceleration measurements.

10. The system (10) according to claim 9,

- wherein the arithmetic unit (110) is configured to calculate Information for a route based on the parameters ($\mu_n$, $\Sigma_n$, $\sigma_n$) of the probability distribution of acceleration, the route being determined from the road segments of the map data.

11. The system (10) according to one of claims 9 or 10,

- wherein the arithmetic unit (110) is configured to read out parameters ($\mu_n$, $\Sigma_n$, $\sigma_n$) of the probability distribution of acceleration which are associated with the road segment (I) of the current position (XGPS); and
- wherein the arithmetic unit (110) is configured to determine control data for controlling a drive of a motor vehicle on the basis of the read-out parameters ($\mu_n$, $\Sigma_n$, $\sigma_n$) of the probability distribution of acceleration.

12. The system (10) according to one of claims 9 to 11,

- wherein the parameters ($\mu_n$, $\Sigma_n$, $\sigma_n$) of the probability distribution of acceleration are assigned to one specific road segment (i);
or
- wherein the parameters ($\mu_n$, $\Sigma_n$, $\sigma_n$) of the probability distribution of acceleration are assigned to a class (C(i)) of road segments (I), the map data having classes of road segments, and the road segments which meet the preset road-specific criteria being associated with each class.

13. The system (10) according to one of claims 9 to 12,

- wherein the arithmetic unit (110) is configured to evaluate measured values (v(t), a(t)) of the velocity and/or the acceleration in a determined road segment (I);
- wherein the arithmetic unit (110) is configured to calculate new parameters ($u_{n+1}$, $\Sigma_{n+1}$, $\sigma_{n+1}$) of a probability distribution of acceleration based on the parameters ($\mu_n$, $\Sigma_n$, $\sigma_n$) stored In the memory (140) and measured values (v(t), a(t)) of the velocity and/or the acceleration within the road segment (I); and
- wherein the arithmetic unit (110) Is configured to store in the memory (140) the calculated new parameters ($\mu_{n+1}$, $\Sigma_{n+1}$, $\sigma_{n+1}$) of the probability distributlon of acceleration, the new parameters ($\mu_{n+1}$, $\Sigma_{n+1}$, $\sigma_{n+1}$) being assigned to the determined road segment (I).

**Patentansprüche**

1. Verfahren zum Bestimmen von Beschleunigungen für ein Kraftfahrzeug;

- bei dem ein Straßensegment (i) anhand von Kartendaten auf Grundlage einer aktuellen Position (XGPS) bestimmt wird;
- bei dem mehrere Beschleunigungswerte (a(t), a1, a2) und/oder mehrere Geschwindigkeitswerte (v(t), v1, v2) in dem Straßensegment (i) gemessen werden;
- bei dem gespeicherte Parameter ($\mu_n$, $\Sigma_n$, $\sigma_n$) einer Wahrscheinlichkeitsverteilung der Beschleunigung in dem Straßensegment (i) aus einem Speicher ausgelesen werden, wobei die gespeicherten Parameter ($\mu_n$, $\Sigma_n$, $\sigma_n$) dem Straßensegment (i) zugeordnet sind;
- bei dem neue Parameter ($\mu_{n+1}$, $\Sigma_{n+1}$, $\sigma_{n+1}$) der Wahrscheinlichkeitsverteilung der Beschleunigung in dem Straßensegment (i) anhand der ausgelesenen Parameter ($\mu_n$, $\Sigma_n$, $\sigma_n$) und anhand der mehreren Beschleunigungswerte (a(t), a1, a2) und/oder der mehreren Geschwindigkeitswerte (v(t), v1, v2) berechnet werden; und
- bei dem die neuen Parameter ($\mu_{n+1}$, $\Sigma_{n+1}$, $\sigma_{n+1}$) der Wahrscheinlichkeitsverteilung gespeichert werden.

2. Verfahren nach Anspruch 1,

- bei dem die Kartendaten Klassen von Straßensegmenten aufweisen, wobei jeder Klasse Straßensegmente zugehörig sind und wobei Straßensegmente jeder Klasse identische festgelegte straßenspezifische Kriterien aufweisen;
- bei dem wenigstens eine Klasse (C(i)), die dem bestimmten Straßensegment (i) zugeordnet ist, ermittelt wird; und
- bei dem die neuen Parameter ($\mu_{n+1}$, $\Sigma_{n+1}$, $\sigma_{n+1}$) der Wahrscheinlichkeitsverteilung der Beschleunigung für das Straßensegment (i) und/oder für die dem Straßensegment (i) zugeordnete Klasse (C(i)) gespeichert werden.

3. Verfahren nach einem der Ansprüche 1 oder 2,

- bei dem die neuen Parameter ($\mu_{n+1}$, $\Sigma_{n+1}$, $\sigma_{n+1}$) unter Verwendung einer Rekursionsformel berechnet werden; und
- wobei die gemessenen Beschleunigungswerte (a(t), a1, a2) und/oder Geschwindigkeitswerte (v(t), v1, v2) des Straßensegments (i) und die gespeicherten Parameter ($\mu_n$, $\Sigma_n$, $\sigma_n$) in die Rekursionsformel eingesetzt werden.

4. Verfahren nach einem der Ansprüche 1 bis 2,

- bei dem aktuelle Parameter ($\mu$, $\mu 1$, $\mu 2$, $\Sigma 1$, $\Sigma 2$, $\sigma$) einer aktuellen Wahrscheinlichkeitsverteilung der Beschleunigung anhand der gemessenen mehreren Beschleunigungswerte (a(t), a1, a2) und/oder mehreren Geschwindigkeitswerte (v(t), v1, v2) berechnet werden; und
- bei dem die neuen Parameter ($\mu_{n+1}$, $\Sigma_{n+1}$, $\sigma_{n+1}$) der Wahrscheinlichkeitsverteilung der Beschleunigung anhand

der aktuellen Parameter ($\mu$, $\mu1$, $\mu2$, $\Sigma1$, $\Sigma2$, $\sigma$) und der gespeicherten Parameter ($\mu_n$, $\Sigma_n$, $\sigma_n$) berechnet werden.

5. Verfahren nach einem der Ansprüche 1 bis 4,

- bei dem die gespeicherten Parameter ($\mu_n$, $\Sigma_n$, $\sigma_n$) dem Straßensegment (i) zugewiesen werden und ausgelesen werden, um die neuen Parameter ($\mu_{n+1}$, $\Sigma_{n+1}$, $\sigma_{n+1}$) für das bestimmte Straßensegment (i) zu berechnen.

6. Verfahren wenigstens nach Anspruch 2,

- bei dem die gespeicherten Parameter ($\mu_n$, $\Sigma_n$, $\sigma_n$) der bestimmten Klasse (C(i)) des Straßensegments (i) zugewiesen werden und ausgelesen werden, um die neuen Parameter ($\mu_{n+1}$, $\Sigma_{n+1}$ $\sigma_{n+1}$) für die bestimmte Klasse (C(i)) zu berechnen.

7. Verfahren nach einem der Ansprüche 1 bis 6,

- bei dem ein Zuverlässigkeitsinformationswert (n) zusätzlich zu den berechneten neuen Parametern ($\mu_{n+1}$, $\Sigma_{n+1}$ $\sigma_{n+1}$) berechnet wird; und
- bei dem die berechneten neuen Parameter ($\mu_{n+1}$, $\Sigma_{n+1}$, $\sigma_{n+1}$) der Wahrscheinlichkeitsverteilung der Beschleunigung gemeinsam mit dem den berechneten neuen Parametern ($\mu_{n+1}$, $\Sigma_{n+1}$, $\sigma_{n+1}$) zugeordneten Zuverlässigkeitsinformationswert (n) gespeichert werden.

8. Verfahren nach einem der Ansprüche 1 bis 7,

- bei dem die neuen Parameter ($\mu_{n+1}$, $\Sigma_{n+1}$, $\sigma_{n+1}$) der Wahrscheinlichkeitsverteilung unter Verwendung eines verkehrsbezogenen Parameters ($\lambda$) der Wahrscheinlichkeitsverteilung von Beschleunigungen unterschiedlichen Verkehrsaufkommen zugewiesen werden, wobei der verkehrsbezogene Parameter ($\lambda$) auf der Dichte des Verkehrs in dem bestimmten Straßensegment (i) beruht,
- bei dem der verkehrsbezogene Parameter ($\lambda$) anhand der mehreren Beschleunigungswerte (a(t), a1, a2) und/oder der mehreren Geschwindigke'rtswerte (v(t), v1, v2) und/oder empfangener Verkehrsdaten berechnet wird.

9. System (10) für ein Kraftfahrzeug,

- umfassend eine Recheneinheit (110);
- umfassend einen Speicher (140), der Kartendaten mit Straßensegmenten enthält;
- umfassend eine Schnittstelle (102) zu einem Datenbus (CAN) zum Übertragen gemessener Werte (v(t), a(t)) einer Geschwindigkeit und/oder einer Beschleunigung;
- umfassend einen Empfänger (101) zum Bestimmen einer aktuellen Position (XGPS);
- bei dem die Recheneinheit (110) eingerichtet ist, ein Straßensegment (i) zu bestimmen, das der aktuellen Position (XGPS) zugehörig ist; und
- bei dem die Recheneinheit (110) eingerichtet ist, Parameter ($\mu_n$, $\Sigma_n$, $\sigma_n$) einer Wahrscheinlichkeitsverteilung der Beschleunigung aus dem Speicher (140) zu laden, wobei die Parameter ($\mu_n$, $\Sigma_n$, $\sigma_n$) einem Straßensegment der Kartendaten zugeordnet sind und die Parameter ($\mu_n$, $\Sigma_n$, $\sigma_n$) der Wahrscheinlichkeitsverteilung der Beschleunigung anhand von Geschwindigkeitsmessungen und/oder Beschleunigungsmessungen bestimmt sind.

10. System (10) nach Anspruch 9,

- bei dem die Recheneinheit (110) eingerichtet ist, Informationen für eine Route auf Grundlage der Parameter ($\mu_n$, $\Sigma_n$, $\sigma_n$) der Wahrscheinlichkeitsverteilung der Beschleunigung zu berechnen, wobei die Route anhand der Straßensegmente der Kartendaten bestimmt ist.

11. System (10) nach einem der Ansprüche 9 oder 10,

- bei dem die Recheneinheit (110) eingerichtet ist, Parameter ($\mu_n$, $\Sigma_n$, $\sigma_n$) der Wahrscheinlichkeitsverteilung der Beschleunigung auszulesen, die dem Straßensegment (i) der aktuellen Position (XGPS) zugeordnet sind; und
- bei dem die Recheneinheit (110) eingerichtet ist, Steuerdaten zum Steuern eines Antriebs eines Krafttahrzeugs auf Grundlage der ausgelesenen Parameter ($\mu_n$, $\Sigma_n$, $\sigma_n$) der Wahrscheinlichkeitsverteilung der Beschleunigung zu bestimmen.

**12.** System (10) nach einem der Ansprüche 9 bis 11,

- bei dem die Parameter ($\mu_n$, $\Sigma_n$, $\sigma_n$) der Wahrscheinlichkeitsverteilung der Beschleunigung genau einem spezifischen Straßensegment (i) zugewiesen sind;
oder
- bei dem die Parameter ($\mu_n$, $\Sigma_n$, $\sigma_n$) der Wahrscheinlichkeitsverteilung der Beschleunigung einer Klasse (C(i)) von Straßensegmenten (i) zugewiesen sind, wobei die Kartendaten Klassen von Straßensegmenten aufweisen, und jeder Klasse die Straßensegmente zugeordnet sind, die die festgelegten straßenspezifischen Kriterien erfüllen.

**13.** System (10) nach einem der Ansprüche 9 bis 12,

- bei dem die Recheneinheit (110) eingerichtet ist, gemessene Werte (v(t), a(t)) der Geschwindigkeit und/oder der Beschleunigung in einem bestimmten Straßensegment (i) zu bewerten;
- bei dem die Recheneinheit (110) eingerichtet ist, neue Parameter ($\mu_{n+1}$, $\Sigma_{n+1}$, $\Sigma_{n+1}$) einer Wahrscheinlichkeitsverteilung der Beschleunigung auf Grundlage der Parameter ($\mu_n$, $\Sigma_n$, $\sigma_n$), die in dem Speicher (140) gespeichert sind, und gemessener Werte (v(t), a(t)) der Geschwindigkeit und/oder der Beschleunigung in dem Straßensegment (i) zu berechnen; und
- bei dem die Recheneinheit (110) eingerichtet ist, die berechneten neuen Parameter ($\mu_{n+1}$, $\Sigma_{n+1}$, $\sigma_{n+1}$) der Wahrscheinlichkeitsverteilung der Beschleunigung im Speicher (140) zu speichern, wobei die neuen Parameter ($\mu_{n+1}$, $\Sigma_{n+1}$, $\sigma_{n+1}$) dem bestimmten Straßensegment (i) zugewiesen sind.

**Revendications**

**1.** Procédé de détermination des accélérations, pour un véhicule à moteur,

- dans lequel un segment de route (I) est déterminé à partir de données de carte en fonction d'une position actuelle (XGPS) ;
- dans lequel une pluralité de valeurs d'accélération (a(t)), a1, a2 et/ou une pluralité de valeurs de vitesse (v(t)), v1, v2 est/sont mesurée/s à l'intérieur du segment de route (I) ;
- dans lequel des paramètres stockés ($\mu_n$, $\Sigma_n$, $\sigma_n$) d'une distribution de probabilités d'accélération à l'intérieur du segment (I) de route sont lus dans une mémoire, les paramètres stockés ($\mu_n$, $\Sigma_n$, $\sigma_n$) étant associés au segment de route (I) ;
- dans lequel de nouveaux paramètres ($\mu_{n+1}$, $\Sigma_{n+1}$, $\sigma_{n+1}$) de la distribution de probabilités d'accélération à l'intérieur du segment de route (I) sont calculés à partir des paramètres lus ($\mu_n$, $\Sigma_n$, $\sigma_n$) et à partir d'au moins l'une parmi la pluralité de valeurs d'accélération (a(t)), a1, a2 et la pluralité de valeurs de vitesse (v(t), v1, v2) ; et
- dans lequel les nouveaux paramètres ($\mu_{n+1}$, $\Sigma_{n+1}$, $\sigma_{n+1}$) de la distribution de probabilités sont stockés.

**2.** Procédé selon la revendication 1,

- dans lequel les données de carte ont des classes de segment de route, les segments de route étant associés à chaque classe, et des segments de route de chaque classe ayant des critères spécifiques à la route prédéfinis identiques ;
- dans lequel au moins une classe (C(i)) associée au segment (I) de route déterminé est établie ; et
- dans lequel les nouveaux paramètres ($\mu_{n+1}$, $\Sigma_{n+1}$, $\sigma_{n+1}$) de la distribution de probabilités d'accélération sont stockés pour le segment de route (I) et/ou pour la classe (C(i)) associée au segment (I) de route.

**3.** Procédé selon l'une des revendications 1 ou 2,

- dans lequel les nouveaux paramètres ($\mu_{n+1}$, $\Sigma_{n+1}$, $\sigma_{n+1}$) sont calculés à l'aide d'une formule de récurrence; et
- dans lequel les valeurs d'accélération mesurées (a(t), a1, a2) et/ou les valeurs de vitesse (v(t), v1, v2 du segment de route (I) et les paramètres stockés ($\mu_n$, $\Sigma_n$, $\sigma_n$) sont entrées dans la formule de récurrence.

**4.** Procédé selon l'une des revendications 1 ou 2,

- dans lequel les paramètres actuels ($\mu$, $\mu_1$, $\mu_2$, $\Sigma_1$, $\Sigma_2$, $\sigma$) d'une distribution actuelle de probabilités d'accélération sont calculés à partir de la pluralité mesurée de valeurs d'accélération (a(t)), a1, a2 et/ou à partir de la pluralité de valeurs de vitesse (v(t), v1, v2) ; et

- dans lequel les nouveaux paramètres ($\mu_{n+1}$, $\Sigma_{n+1}$, $\sigma_{n+1}$) de la distribution de probabilités d'accélération sont calculés à partir des paramètres actuels ($\mu$, $\mu_1$, $\mu_2$, $\Sigma_1$, $\Sigma_2$, $\sigma$) et des paramètres stockés ($\mu_n$, $\Sigma_n$, $\sigma_n$).

**5.** Procédé selon l'une des revendications 1 à 4,

- dans lequel les paramètres stockés ($\mu_n$, $\Sigma_n$, $\sigma_n$) sont affectés au segment de route (I) et sont lus afin de calculer les nouveaux paramètres ($\mu_{n+1}$, $\Sigma_{n+1}$, $\sigma_{n+1}$) pour le segment de route estimé (I).

**6.** Procédé selon au moins la revendication 2,

- dans lequel les paramètres stockés ($\mu_n$, $\Sigma_n$, $\sigma_n$) sont affectés à la classe estimée (C(I)) du segment de route (I) et lus afin de calculer les nouveaux paramètres ($\mu_{n+1}$, $\Sigma_{n+1}$, $\Sigma_{n+1}$) pour la classe estimée (C(i)).

**7.** Procédé selon l'une des revendications 1 à 6,

- dans lequel une valeur d'informations de fiabilité (n) est calculée en plus des nouveaux paramètres calculés ($\mu_{n+1}$, $\Sigma_{n+1}$, $\sigma_{n+1}$) ; et
- dans lequel les nouveaux paramètres estimés ($\mu_{n+1}$, $\Sigma_{n+1}$, $\sigma_{n+1}$), de la distribution de probabilités d'accélération sont stockés ensemble avec la valeur d'informations de fiabilité (n) associée aux nouveaux paramètres calculés ($\mu_{n+1}$, $\Sigma_{n+1}$, $\sigma_{n+1}$,).

**8.** Procédé selon l'une des revendications 1 à 7,

- dans lequel les nouveaux paramètres ($\mu_{n+1}$, $\Sigma_{n+1}$, $\sigma_{n+1}$) de la distribution de probabilités sont affectés à des volumes de trafic différents à l'aide d'un paramètre associé au trafic ($\lambda$) de la distribution de probabilités d'accélérations, le paramètre ($\lambda$) associé au trafic étant fonction de la densité du trafic à l'intérieur du segment de route estimé (I), le paramètre ($\lambda$) associé au trafic étant estimé à partir de la pluralité de valeurs d'accélération (a(t), a1, a2) et/ou à partir de la pluralité de valeurs de vitesse (v(t), v1, v2) et/ou de données de trafic reçues.

**9.** Système (10) pour un véhicule à moteur,

- comprenant une unité arithmétique (110) ;
- comprenant une mémoire (140) qui contient des données de carte ayant des segments de route;
- comprenant une interface (102) vers un bus de données (CAN) pour transmettre des valeurs mesurées (v(t), a(t)) d'une vitesse et/ou d'une accélération ;
- comprenant un récepteur (101) pour déterminer une position actuelle (XGPS) ;
- dans lequel l'unité arithmétique (110) est conçue pour déterminer un segment de route (I) associé à la position actuelle (XGPS) ; et
- dans lequel l'unité arithmétique (110) est conçue pour charger des paramètres ($\mu_n$, $\Sigma_n$, $\sigma_n$) d'une distribution de probabilités d'accélération à partir de la mémoire (140), les paramètres ($\mu_n$, $\Sigma_n$, $\sigma_n$) étant associés à un segment de route des données de carte, et les paramètres ($\mu_n$, $\Sigma_n$, $\sigma_n$) de la distribution de probabilités d'accélération étant déterminés à partir des mesures de vitesse et/ou des mesures d'accélération.

**10.** Système (10) selon la revendication 9,

- dans lequel l'unité arithmétique (110) est conçue pour calculer des informations pour un itinéraire en fonction des paramètres ($\mu_n$, $\Sigma_n$, $\sigma_n$) de la distribution de probabilités d'accélération, l'itinéraire étant déterminé à partir des segments de route des données de carte.

**11.** Système (10) selon l'une des revendications 9 ou 10,

- dans lequel l'unité arithmétique (110) est conçue pour lire des paramètres ($\mu_n$, $\Sigma_n$, $\sigma_n$) de la distribution de probabilités d'accélération qui sont associés au segment de route (I) de la position actuelle (XGPS) ; et
- dans lequel l'unité arithmétique (110) est conçue pour déterminer les données de contrôle pour contrôler un entraînement d'un véhicule à moteur sur la base des paramètres lus ($\mu_n$, $\Sigma_n$, $\sigma_n$) de la distribution de probabilités d'accélération.

**12.** Système (10) selon l'une des revendications 9 à 11,

- dans lequel les paramètres ($\mu_n$, $\Sigma_n$, $\sigma_n$) de la distribution de probabilités d'accélération sont affectés à un segment de route (i) spécifique ;
ou
- dans lequel les paramètres ($\mu_n$, $\Sigma_n$, $\sigma_n$) de la distribution de probabilités d'accélération sont affectés à une classe (C(i)) de segments de route (l), les données de carte ayant des classes de segments de route, les segments de route qui répondent aux critères prédéfinis spécifiques à la route étant associés à chaque classe.

**13.** Système (10) selon l'un des revendications 9 à 12,

- dans lequel l'unité arithmétique (110) est conçue pour évaluer des valeurs mesurées (v(t), a(t)) de la vitesse et/ou de l'accélération dans un segment de route déterminé (l) ;
- dans lequel l'unité arithmétique (110) est conçue pour calculer de nouveaux paramètres ($\mu_{n+1}$, $\Sigma_{n+1}$, $\sigma_{n+1}$) d'une distribution de probabilités d'accélération en fonction des paramètres ($\mu_n$, $\Sigma_n$, $\sigma_n$) stockés dans la mémoire (140) et des valeurs mesurées (v(t), a(t)) de la vitesse et/ou de l'accélération à l'intérieur du segment de route (l) ; et
- dans lequel l'unité arithmétique (110) est conçue pour stocker dans la mémoire (140) les nouveaux paramètres calculés ($\mu_{n+1}$, $\Sigma_{n+1}$, $\sigma_{n+1}$) de la distribution de probabilités d'accélération, les nouveaux paramètres ($\mu_{n+1}$, $\Sigma_{n+1}$, $\sigma_{n+1}$) étant affectés au segment de route déterminé (l)

FIG.1a

FIG.1b

FIG.2

FIG.3

1. ⟿ ( enter )

2. ⟿ [ XGPS ]

3. ⟿ [ i ]

4. ⟿ [ $v(t), a(t)$ ]

5 ⟿ [ $\mu, \Sigma, \sigma, A_k^i(fk)$ ]

6. ⟿ [ $\mu_{n+1}, \Sigma_{n+1}, \sigma_{n+1}$<br>$\mu_n, \Sigma_n, \sigma_n$ ]

7. ⟿ [ save, $\{ i, C(i)\}$ ]

8. ⟿ ( leave )

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008112335 A1

- US 20080004789 A1